# EUROPÄISCHE PATENTSCHRIFT

(11) **EP 2 733 707 B1**
(45) Veröffentlichungstag und Bekanntmachung des Hinweises auf die Patenterteilung: **24.01.2018**
(21) Anmeldenummer: 12306404.0
(22) Anmeldetag: 14.11.2012
(51) Int. Cl.: H01B 7/22, F16L 11/08, H01B 7/04

(54) **Langgestrecktes Gut mit einer Armierung**
Elongated goods with a reinforcement
Marchandise allongée avec une armature

(43) Veröffentlichungstag der Anmeldung: 21.05.2014
(73) Patentinhaber: Nexans, 92400 Courbevoie (FR)
(72) Erfinder: Dr. Frohne, Christian, 30657 Hannover (DE); Reiter, Christian, 31157 Sarstedt (DE); Eggertsen, Carl Fredrik, 45292 Strömstad (SE)
(74) Vertreter: Döring, Roger

(56) Entgegenhaltungen:
- WO-A1-2011/105428
- WO-A1-2012/131315
- WO-A1-2012/172290
- DE-A1- 3 041 316
- JP-A- 2002 100 245
- US-A- 2 894 057
- US-A- 3 831 636
- US-A- 4 317 000

## Beschreibung

Die Erfindung bezieht sich auf langgestrecktes Gut mit einer Armierung gemäß dem Oberbegriff des Patentanspruchs 1.

Ein entsprechender Gegenstand geht aus der US 3,831,636 A hervor.

"Langgestrecktes Gut" im Sinne der Erfindung kann ein elektrisches Kabel oder eine Rohrleitung sein, die vorzugsweise im Offshore-Gebiet eingesetzt werden. Im folgenden wird stellvertretend auch für ein Kabel die Rohrleitung berücksichtigt. "Kern" kann dementsprechend ein mit einem Mantel aus Isoliermaterial versehenes Kabel oder ein Rohr sein. Ein "Draht" im Sinne der Erfindung kann einen kreisrunden Querschnitt haben, er kann aber auch als Flachdraht mit etwa rechteckigem Querschnitt ausgeführt sein.

Rohrleitungen werden beispielsweise als bewegliche Rohre zum Transport von Öl, Gas, Kohlenwasserstoff oder Wasser zwischen beweglichen und/oder feststehenden Anordnungen von Öl- oder Gasförderanlagen eingesetzt, die mit entsprechenden, im Meer aufgebauten Plattformen zusammenarbeiten. Solche Rohrleitungen müssen radiale Belastungen aushalten, die einerseits durch den Druck des transportierten Mediums innen und andererseits durch den Druck des Meerwassers außen entstehen, das insbesondere in größeren Tiefen von über 1000 m auf die Rohrleitungen einwirkt. Sie müssen außerdem gegen in axialer Richtung wirkende Zugbelastungen beständig sein.

Die WO 2011/105428 A1 beschreibt eine flexible Rohrleitung mit einer Armierung, in welcher zwei Lagen von Streifen dicht an dicht liegend jeweils um eine Unterlage herumgewickelt sind, die aus legiertem Stahl bestehen, der von einer Kunststoffschicht umgeben ist. Diese Schicht dient hauptsächlich dem Korrosionsschutz für die Streifen aus legiertem Stahl. Das eingesetzte Material soll außerdem für Wasser und Chemikalien undurchlässig sein, es soll eine gute Verträglichkeit mit Schwefel und außerdem physikalische Eigenschaften haben, die für den Transport von in der Schrift erwähnten Fluiden geeignet ist. Zwischen den Streifen aus legiertem Stahl und der Kunststoffschicht kann außerdem noch eine aus Metall bestehende Schutzschicht angebracht sein.

Das Dokument WO 2012/172290 A1, welches unter Art. 54(3) EPÜ fällt, beschreibt ein Rohr für eine Versorgungsleitung für Unterwasserbohrungen, wobei eine Armierung zwei übereinander angeordnete Lagen aus fasrigen Garnen umfasst.

Die eingangs erwähnte US 3,831,636 A beschreibt eine flexible Rohrleitung mit einem quer zu seiner Längsrichtung gewellten Metallrohr. Über dem Metallrohr sind zu dessen mechanischer Stabilisierung als Armierung zwei übereinander angeordnete Lagen aus dicht an dicht liegenden, metallischen Drähten aufgeseilt, zwischen denen eine aus einem Polymer bestehende Zwischenschicht angebracht ist. Die Drähte haben einen rechteckigen Querschnitt. Wenn die Rohrleitung beim Verlegen oder auch im Betrieb gebogen wird, treten Relativbewegungen zwischen den Drähten der Armierung auf. Diese Relativbewegung führt zu einer starken Abnutzung der Drähte, mit entsprechender Schwächung der Armier-Funktion. Beispielsweise bei aus Edelstahl bestehenden Drähten kann es auch zu lokalen Kaltverschweißungen zwischen den Drähten kommen, die zu einem erhöhten Abrieb führen.

Der Erfindung liegt die Aufgabe zugrunde, die mechanischen Eigenschaften der Armierung der eingangs geschilderten Rohrleitung zu verbessern.

Diese Aufgabe wird entsprechend dem kennzeichnenden Merkmal des Patentanspruchs 1 gelöst.

Die die Drähte umgebende, verschleißfeste Schicht verhindert einen direkten Kontakt zwischen den aus Metall bestehenden Drähten, so daß kein durch die gegenseitige Berührung der Drähte verursachter Abrieb des Materials derselben auftreten kann. Da die äußere Oberfläche der die Drähte umgebenden Schicht außerdem glatt bzw. gleitfähig ist, wird dieselbe bei einer Relativbewegung der Drähte zueinander mechanisch weniger beansprucht, so daß ein Abrieb der Schichten durch gegenseitige Berührung kaum auftritt. Die Festigkeit der Armierung wird also nicht durch reibungsbedingte Veränderungen der Oberfläche der Schichten beeinträchtigt. Die verschleißfeste Schicht besteht aus einem Material, dessen Partikel einen laminaren Aufbau aufweisen und die mit geringer Reibung gegeneinander gleiten können. Ein solches Material ist Graphit oder eine Verbindung mit einem sogenannten Übergangsmetall. Die Relativbewegung der Drähte der Armierung zueinander führt in den verschleißfesten Schichten zu einer Ausrichtung der Partikel in Bewegungsrichtung. Durch diese Ausrichtung können die jeweiligen verschleißfesten Schichten bzw. Drähte verschleißfrei gleiten.

Für die stabile Funktion der Armierung reicht es gemäß einer vorteilhaften Ausgestaltung der Erfindung auch aus, wenn in jeder Lage der Drähte abwechselnd ein mit einer verschleißfesten Schicht versehener Draht und ein nicht beschichteter Draht nebeneinander liegen.

Ausführungsbeispiele des Erfindungsgegenstandes sind in den Zeichnungen dargestellt.

Es zeigen:
Fig. 1 in schematischer Darstellung einen Abschnitt einer Rohrleitung nach der Erfindung mit stufenweise abgesetzten Schichten.
Fig. 2 einen Querschnitt durch einen beschichteten Draht.
Fig. 3 und 4 zwei unterschiedliche Ausführungsformen einer die Rohrleitung umgebenden Lage aus aufgeseilten Drähten.

Im Folgenden werden aus Edelstahl bestehende Drähte beschrieben, die von einer aus einem verschleißfesten Material bestehenden Schicht umgeben sind, welche eine glatte bzw. gleitfähige äußere Oberfläche hat. Diese Schicht kann beispielsweise aus einem flüssigen bzw. fließfähigen Material erzeugt werden, das im Durchlauf durch ein Bad auf die Drähte aufgebracht oder auf dieselben aufgesprüht wird. Das Material kann danach zu seiner Aushärtung einer Wärmebehandlung unterzogen werden. Es ist auch möglich, aus dem mechanisch stabilen Material bestehende Bänder auf die Drähte so aufzuwickeln, daß sich eine lückenlose Schicht ergibt.

Für die Schicht geeignete Materialien sind im Vorangehenden als Beispiele angeführt. Wie bereits erwähnt, ist es entscheidend, daß das eingesetzte Material ausreichende Verschleißfestigkeit aufweist und an seiner äußeren Oberfläche so glatt ist, daß benachbarte Teile daran entlang gleiten können.

Die Erfindung wird im Folgenden weiter für eine Rohrleitung als langgestrecktes Gut erläutert, stellvertretend auch für ein elektrisches Kabel. Dabei sind die für die Armierung eingesetzten Drähte als Flachdrähte dargestellt. Sie können aber auch einen kreisrunden Querschnitt haben.

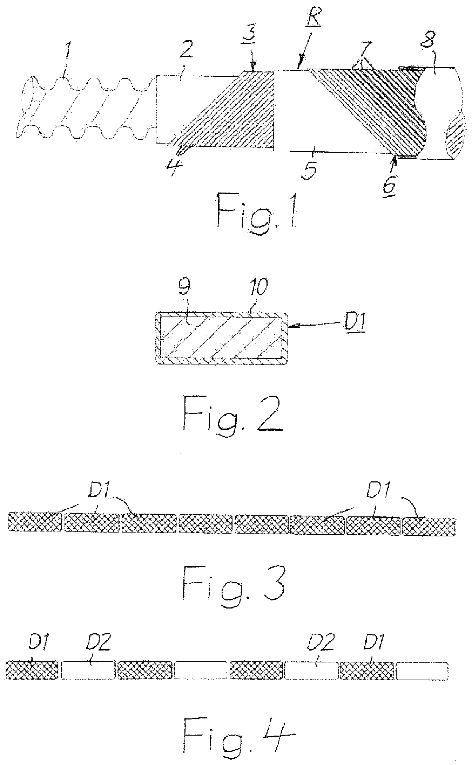

In Fig. 1 ist ein Ende einer Rohrleitung R dargestellt, welche ein Rohr 1 aus Metall aufweist, das in bevorzugter Ausführungsform quer zu seiner Längsrichtung gewellt und dadurch gut biegbar ist. Das beispielsweise aus Edelstahl bestehende Rohr 1 ist rundum und auf seiner ganzen Länge von einer Schicht 2 umgeben, die mit Vorteil aus einem Polymer besteht. Über der Schicht 2 ist als Teil einer Armierung eine Lage 3 von aus Edelstahl bestehenden Drähten 4 angeordnet, die dicht an dicht liegend um die Schicht 2 herumverseilt sind. Die Lage 3 ist von einer Zwischenschicht 5 aus einem Polymer umgeben, auf welche in einer zweiten Lage 6 aus Edelstahl bestehenden Drähte 7 aufgeseilt sind. Die Lage 6 ist von einem Mantel 8 aus Isoliermaterial umgeben.

Die Drähte 7 sind im dargestellten Ausführungsbeispiel in bevorzugter Ausführungsform mit zur Schlagrichtung der Drähte 4 entgegengesetzter Schlagrichtung aufgebracht. Die Drähte 4 und 7 können aber auch mit gleicher Schlagrichtung aufgeseilt sein. Dabei ist es auch möglich, unterschiedliche Schlaglängen in den beiden Lagen 3 und 6 einzusetzen. Die Drähte 4 und 7 weisen gemäß Fig. 2 als Drähte D1 den eigentlichen metallischen Draht 9 und die denselben vollständig und auf seiner ganzen Länge umgebende Schicht 10 aus dem verschleißfesten Material auf.

Die Schicht 10 kann so wie es im Vorangehenden angegeben ist separat auf die Drähte 9 aufgebracht werden. Sie kann aber auch während des Verseilvorgangs erzeugt werden, mit dem die Drähte 4 und 7 auf die entsprechenden Unterlagen der Rohrleitung R aufgeseilt werden. Die Schicht 10 kann eine Dicke haben, die beispielsweise zwischen 10 µm und 100 µm liegt.

Die mit der Schicht 10 versehenen Drähte D1 sind in den Fig. 3 und 4 insgesamt mit einer Kreuzschraffur eingezeichnet, während die nicht beschichteten Drähte D2 in Fig. 4 ohne Schraffur dargestellt sind.

Die Lagen 3 und 6 der Armierung können gemäß Fig. 3 insgesamt nur aus Drähten D1 bestehen. Es ist mit Vorteil aber auch möglich, in den Lagen 3 und 4 abwechselnd Drähte D1 und nicht beschichtete Drähte D2 einzusetzen. In einer weiteren Variante können in der Lage 3 oder in der Lage 6 nur beschichtete Drähte D1 eingesetzt sein, während in der jeweils anderen Lage beschichtete Drähte D1 und unbeschichtete Drähte D2 abwechselnd vorhanden sind.

## Patentansprüche

1. Langgestrecktes Gut mit einer Armierung, welche mindestens zwei übereinander angeordnete Lagen aus zugfesten, aus Edelstahl bestehenden Drähten aufweist, die um einen Kern des langgestreckten Guts dicht an dicht liegend herumverseilt sind, und bei welcher zwischen den Lagen der Drähte eine Trennschicht angeordnet ist, wobei zumindest ein Teil der Drähte von einer an denselben haftenden Schicht (10) umgeben ist, die aus einem verschleißfesten Material, welches Graphit oder eine Verbindung mit einem sogenannten Übergangsmetall ist, besteht, dessen Partikel einen laminaren Aufbau aufweisen und mit geringer Reibung gegeneinander gleiten können, und die eine glatte bzw. gleitfähige Oberfläche hat.

2. Langgestrecktes Gut nach Anspruch 1, **dadurch gekennzeichnet, daß** in den den Kern umgebenden Lagen mit abwechselnder Reihenfolge mit der Schicht (10) versehene Drähte (D1) und nicht beschichtete Drähte (D2) nebeneinander angeordnet sind.

3. Langgestrecktes Gut nach Anspruch 1 oder 2, **dadurch gekennzeichnet, daß** die Drähte (D1,D2) in den unterschiedlichen Lagen mit jeweils unterschiedlicher Schlagrichtung aufgebracht sind.

## Claims

1. An elongated product with an armoring, which comprises at least two layers of tension proof wires one above the other, which are stranded close together around a core of the product, with a separating layer between the two layers of wires, wherein at least a part of the wires is surrounded by an adhering layer (10), which consists of a wear-resistant material, which is graphit or a mixture of a so called transition metal, the particles of which have a laminar form and can slide relative to each other with small friction, and which have a smooth or slidable outer surface.

2. Elongated product according to claim 1, **characterized in that** within the layers which surround the core wires (D1) are mounted alternatingly side by side which have the adhering layer (10) and wires (D2) which are not coated.

3. Elongated product according to claim 1 or 2, **characterized in that** the wires (D1,D2) in the different layers are laid with different direction of lay respectively.

## Revendications

1. Article allongé avec une armature, qui présente au moins deux couches disposées l'une au-dessus de l'autre, constituées de fils métalliques en acier inoxydable résistant à la traction, qui sont enroulés les uns à côté des autres autour d'un noyau de l'article allongé, une couche de séparation étant disposée entre les couches de fils métalliques, au moins une partie des fils métalliques étant entourée par une couche (10) adhérant à ceux-ci, laquelle se compose d'un matériau résistant à l'usure, qui est du graphite ou un composé comprenant ce qu'on appelle un métal de transition, dont les particules présentent une structure laminaire et peuvent glisser les unes contre les autres avec une faible friction, et qui présente une surface lisse ou glissante.

2. Article allongé selon la revendication 1, **caractérisé en ce que** dans les couches entourant le noyau, des fils métallique (D1) pourvus de la couche (10) sont disposés les uns à côté des autres en alternance avec des fils métalliques (D2) non revêtus.

3. Article allongé selon la revendication 1 ou 2, **caractérisé en ce que** les fils métalliques (D1, D2) sont appliqués dans les différentes couches à chaque fois avec un sens de câblage différent.
